# EUROPEAN PATENT SPECIFICATION

(11) **EP 0 287 094 B1**
(45) Date of publication and mention of the grant of the patent: **10.03.1993**
(21) Application number: 88105971.1
(22) Date of filing: 14.04.1988
(51) Int. Cl.: B60G 3/20

(54) **Automobile rear suspension structure**
Hintere Radaufhängung für ein Kraftfahrzeug
Dispositif de suspension arrière pour automobile

(30) Priority: 14.04.1987 JP 92642/87
(43) Date of publication of application: 19.10.1988
(73) Proprietor: Mazda Motor Corporation, Aki-gun Hiroshima-ken (JP)
(72) Inventor: Koyama, Toshihide, Aki-gun Hiroshima-ken (JP)
(74) Representative: Füchsle, Klaus, Dipl.-Ing.

(56) References cited:
- EP-A- 0 207 795
- JP-U-58 167 205
- US-A- 2 190 298
- US-A- 3 422 918
- US-E- 24 248

## Description

The present invention generally relates to an automobile rear structure, and more particularly, to a double wishbone type rear suspension structure for use in an automotive vehicle.

From US-A-3 422 918 which corresponds to the preamble of claim 1, an independent rear wheel suspension is known in which a driven road wheel is rotatably mounted on a support member having vertically spaced portions universally pivotally connected to the outer ends of laterally extending V-shaped upper and lower control arms mounted for swinging movement about spaced fixed axes. Progressive changes in steer angle during rising and falling movement of the wheel is accomplished by a laterally directed link extending between one of the arms and a portion of the support spaced longitudinally from the axis defined by the vertically spaced portions.

Japanese Utility Model Laid-open Application (Jikkaisho) No. 58-167205 discloses a double wishbone type suspension as one of automobile suspensions, which is frequently utilized to pivotably support each wheel by way of a pair of upper and lower control arms.

In the aforementioned known double wishbone type suspension, however, a damper unit pivotably coupled with the lower control arm is so disposed as to extend through a space formed in the upper control arm having a configuration generally in the form of a figure "A".

Such a construction is followed by great difficulties from the viewpoint of design, since the upper control arm is limited in length to some extent. More specifically, although the upper control arm needs an opening for receiving therein the damper unit, it is necessary to make this opening relatively large so that the interference between the damper unit and the upper control arm may be avoided in the case of bump of the rear wheels. Notwithstanding this fact, since the upper control arm is limited in length, it is difficult to form a large opening therein, thus resulting in that the design freedom is disadvantageously restricted.

Furthermore, since the damper unit extends through the upper control arm, the damper unit is undesirably extremely lowered in service properties.

Accordingly, the present invention has been developed with a view to substantially eliminating the above described disadvantage inherent in the prior art automobile rear suspension structure, and has for its essential object to provide an improved automobile double wishbone type rear suspension structure which can keep the design freedom therein and acts upon each rear wheel to be readily movable in a direction in which toe-in takes place.

Another object of the present invention is to provide a rear suspension structure of the above described type which is simple in construction and can be readily manufactured at a low cost.

These objects are solved according to the present invention by a rear suspension structure according to claim 1.

On account of the inventive construction, the offset relationship between the damper unit and the upper control arm in a direction longitudinally of a vehicle body can keep the design freedom for arranging the double wishbone type rear suspension in a limited space inside each rear wheel.

Moreover, since the upper control arm is disposed in front of the damper unit, it is possible to obtain a relatively large inclination of an imaginary king pin axis which connects an outer rear end portion of the lower control arm and a connecting portion between the upper control arm and a wheel support. Consequently, the amount of offset from the center of each rear wheel becomes relatively large and this fact acts upon the rear wheels to be readily movable in a direction in which the toe-in takes place, when they are subjected to lateral force.

These and other objects and features of the present invention will become more apparent from the following description taken in conjunction with the preferred embodiment thereof with reference to the accompanying drawings, throughout which like parts are designated by like reference numerals, and in which:
Fig. 1 is a top plan view of a chassis of an automotive vehicle having therein a rear suspension structure according to an embodiment of the present invention;
Fig. 2 is a top plan view, partly in section, of an automobile rear suspension structure of the present invention;
Fig. 3 is an elevational view, partly in section, of the rear suspension structure of Fig. 2 as viewed in a direction shown by arrows P;
Fig. 4 is a schematic diagram showing a state in which each rear wheel is so provided as to be readily movable in a direction in which toe-in takes place;
Fig. 5 is a view similar to Fig. 2, which particularly shows a modification thereof;
Fig. 6 is a diagram similar to Fig. 4, in the case of the rear suspension structure of Fig. 5; and
Fig. 7 is a view similar to Fig. 3, which particularly shows another modification thereof.

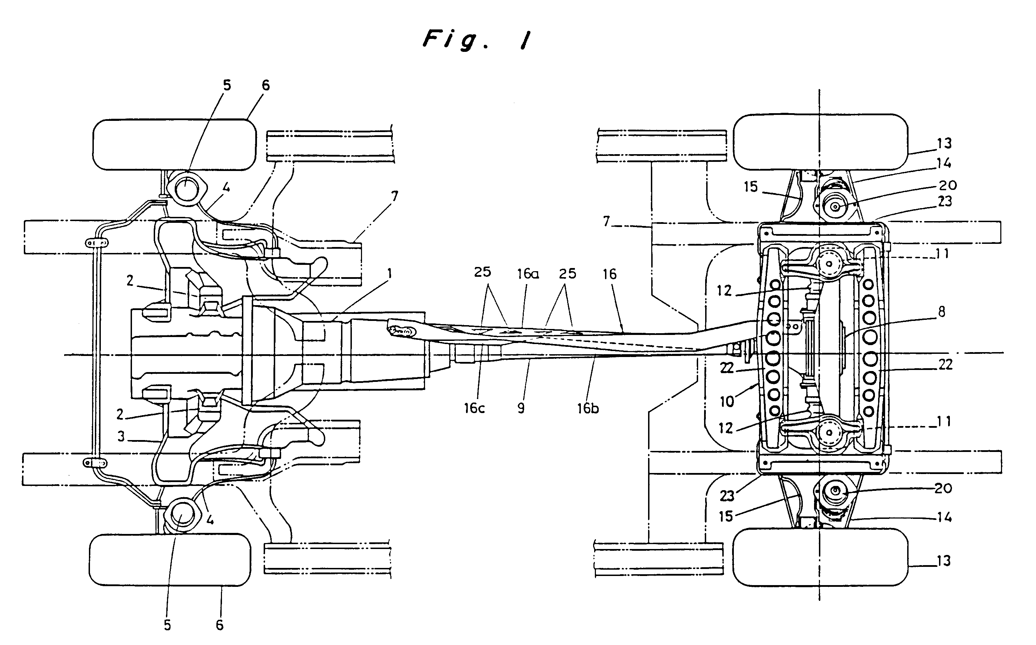

Referring first to Fig. 1, an engine and mission unit 1 to be loaded on a front side of an automotive vehicle is securely mounted on a front cross member 3 in any known manner by way of a pair of engine mounts or engine supports 2 arranged widthwise of a vehicle body. A pair of control arms 4 are pivotably connected at their respective ends to opposite ends of the front cross member 3 whereas a pair of front wheels 6 are pivotably connected to the other respective ends of the control arms 4. The front wheels 6 are supported by a vehicle body 7 through a pair of respective damper units 5. The front cross member 3 is supported by the vehicle body 7 through a suitable elastic member (not shown) in any known manner. The engine and mission unit 1 is comprised of an engine as a driving source, a clutch and a mission.

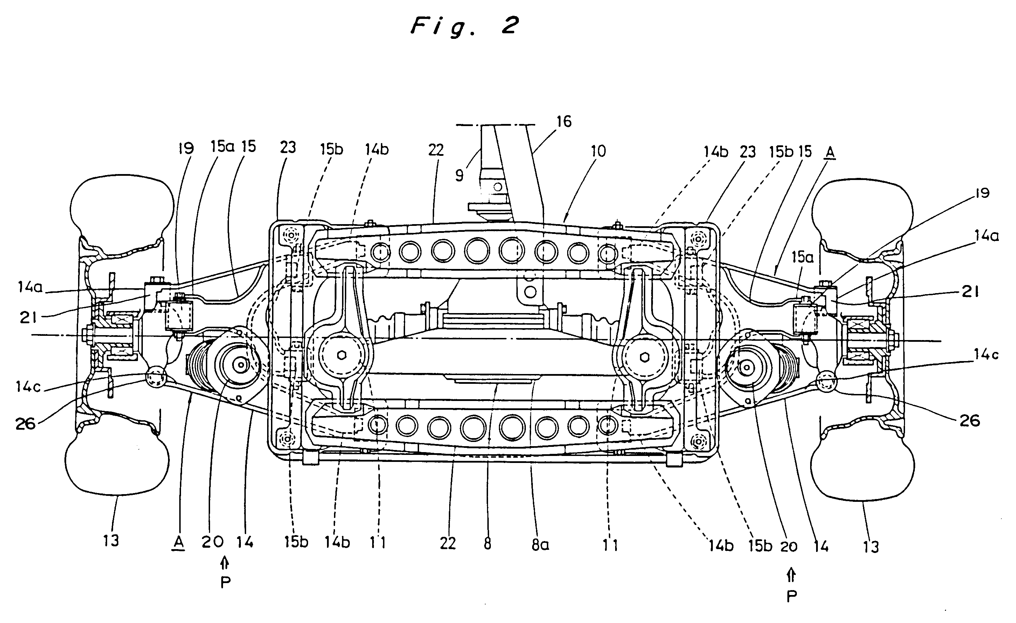

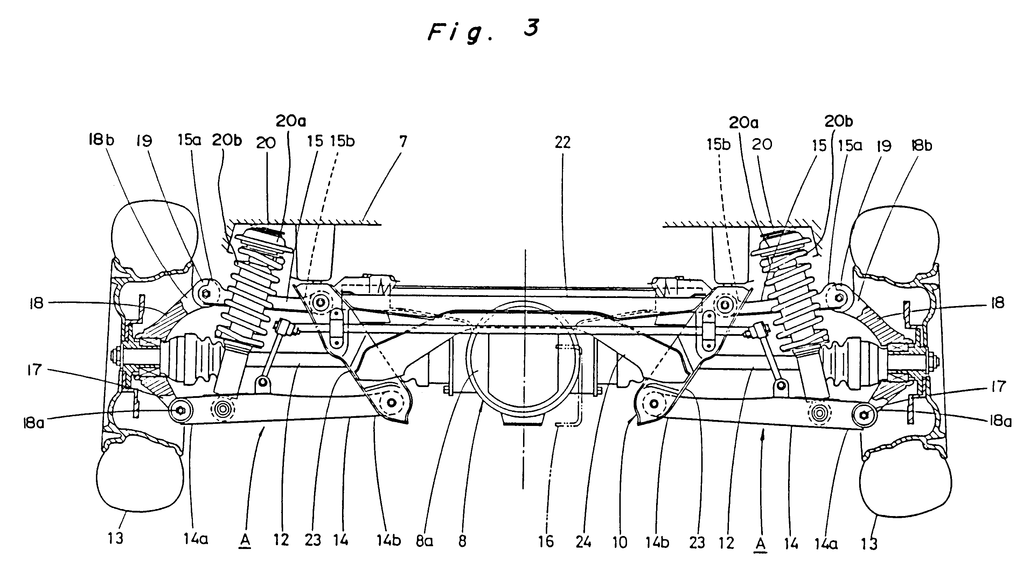

The engine and mission unit 1 is coupled with a differential unit 8 loaded on a rear side of the automotive vehicle by way of a driving shaft 9. The differential unit 8 is carried by a rear cross member 10 through a pair of elastic members 11 and is so constructed as to transmit driving force to rear wheels 13 by way of respective axle shafts 12. The rear cross member 10 is carried by the vehicle body 7 by a suitable elastic member (not shown) in any known manner and comprises a pair of juxtaposed first members 22 extending in a direction widthwise of the vehicle body, a pair of opposed second members 23 extending substantially vertically and each rigidly secured at its upper portion to one end of each first member 22, and a pair of third members 24 rigidly secured to lower portions of the second members 23 and to a lower surface of a central portion of each first member 22, as shown in Figs. 2 and 3.

The engine and mission unit 1 and the differential unit 8 are securely coupled with each other by a power plant frame 16 having a cross section generally in the form of a figure "U". The power plant frame 16 has one vertical side 16a and two opposed upper and lower horizontal sides 16b and 16c extending from opposite horizontal edges of its vertical side 16a so that an opening may be formed between the opposed horizontal sides 16b and 16c. Accordingly, the power plant frame 16 is relatively high in bending rigidity and flexible against torsion. Furthermore, in this embodiment, a plurality of holes 25 having a suitable configuration are formed in the vertical side 16a of the power plant frame 16 and, each of the horizontal sides 16b and 16c thereof has an intermediate portion narrower than its opposite end portions. Consequently, the power plant frame 16 not only holds sufficient bending rigidity, but is improved in flexibility against the torsion, with its own weight being lightened. The power plant frame 16 is so mounted in the vehicle body as to encircle the majority of the driving shaft 9.

Referring next to Figs. 2 and 3, an automobile rear suspension unit will be explained hereinafter according to one preferred embodiment of the present invention.

An automotive vehicle accommodates two rear suspension units A for pivotably supporting respective rear wheels 13.

Each rear suspension unit A is of the double wishbone type suspension comprising an H-shaped lower control arm 14, an A-shaped upper control arm 15, a shaft 17 pivotably connected at its opposite ends to opposed outer end portions 14a and 14c of the lower control arm 14 (that is, to two points in a direction longitudinally of the vehicle body), a knuckle arm or wheel support 18 having a lower end portion 18a pivotably connected with the shaft 17 and an upper end portion 18b pivotably connected with an outer end portion 15a of the upper control arm 15 by way of a bush 19, and a damper unit 20 pivotably connected at its lower end with the lower control arm 14. The upper control arm 15 is branched into two on its inner side, with the branched portion thereof being located inside the damper unit 20 in a direction widthwise of the vehicle body. The damper unit 20 is comprised of a damper 20a and a coil spring 20b. The connecting portion between the upper control arm 15 and the knuckle arm 18 is located in front of the center of rear wheels 13 in a direction longitudinally of the vehicle body, whereas the two connecting portions between the lower control arm 14 and the knuckle arm 18 are respectively located in front and in the rear of the center of rear wheels 13. The upper and lower control arms 15 and 14 are pivotably connected at their respective inner end portions 15b and 14b with upper and lower portions of the rear cross member 10, respectively.

The damper unit 20 is located in the rear of the upper control arm 15 in a direction longitudinally of the vehicle body 7 and has an upper end portion supported by the vehicle body 7 in any known manner. In this way, since the upper control arm 15 and the damper unit 20 are spaced apart from each other or arranged in the offset relationship in a longitudinal direction of the vehicle body 7, the design freedom for arranging both the upper control arm 15 and the damper unit 20 can be assuredly kept within a limited space between the rear cross member 10 and each rear wheel 13, thus preventing the interference between the damper unit 20 and the axle shaft 12. Particularly, as shown in this embodiment, that is to say, in the case of a chassis structure of such a construction that the engine and mission unit 1 disposed on the front side of the vehicle body 7 and the differential unit 8 disposed on the rear side thereof are rigidly coupled with each other by way of the power plant frame 16, a longer interval between mounting portions of the differential unit 8 suitable for mounting it on the vehicle body 7 is of advantage to the torsion or the like. This fact limits the space to be formed between each rear wheel 13 and the rear cross member 10 for mounting therein the rear suspension unit A. Accordingly, the offset relationship between the upper control arm 15 and the damper unit 20 in a direction longitudinally of the vehicle body 7 can advantageously be of service to the design freedom for the arrangement thereof.

There are provided a rubber bush 21 and a pillow ball 26 respectively at front and rear connecting portions where the shaft 17 and two lower end portions 18a of the knuckle arm 18 are pivotably connected with each other. In other words, on the rear side of the two connecting portions between the shaft 17 and the lower end portions 18a of the knuckle arm 18 is provided the pillow ball 26 of a member having a higher elasticity than the rubber bush 21 provided on the front side has. The pillow ball 26 may be replaced by other rubber bush having a spring constant larger than the rubber bush 21 has.

The functioning of the automobile rear suspension unit will be explained hereinafter.

The offset relationship between the damper unit 20 and the upper control arm 15 in a direction longitudinally of the vehicle body is of advantage to the design freedom for arranging the double wishbone type rear suspension A within a limited space. Moreover, the pillow ball 26 disposed at the outer rear end portion 14c of the lower control arm 14 has a higher elasticity than the rubber bush 21 disposed on the outer front end portion 14a thereof has. This construction renders the elasticity of the front connecting portion 14a of the lower control arm 14 to be relatively lower than that of the rear connecting portion 14c thereof.

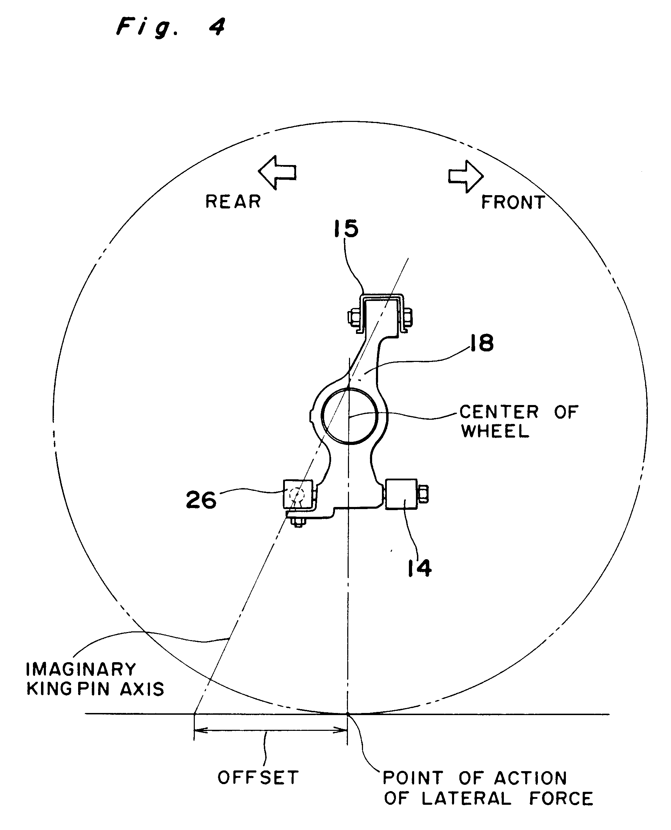

In addition, as shown in Figs. 2 and 4, the upper control arm 15 is arranged ahead of the damper unit 20 in a direction longitudinally of the vehicle body so that the inclination of an imaginary king pin axis is rendered to be larger, which axis is the one connecting the outer rear end portion 14c of the lower control arm 14 and the connecting portion 19 of the upper control arm 15 with the knuckle arm 18. Consequently, the amount of offset from the center of each rear wheel 13 becomes relatively large. That is to say, a length between a point where each rear wheel 13 gets in contact with the road surface and an intersection between the imaginary king pin axis and the road surface is rendered to be larger. Accordingly, the rear wheels 13 can readily move in a direction in which toe-in takes place, when lateral force acts thereupon.

More specifically, in the case where the rear wheels 13 are subjected to the lateral force, for example, when the automotive vehicle turns a corner, the knuckle arms 18 for supporting respective rear wheels 13 are caused to rotate so that the rear wheels 13 may be directed inside the vehicle body. This phenomenon is called "Toe-in" resulting in that the automotive vehicle is hard to spin, and therefore, the stability at the cornering can be advantageously improved.

It is to be noted here that in this embodiment, although the lower control arm 14 has different spring constants at their two outer end portions 14a and 14c for connecting it with the lower ends 18a of the knuckle arm 18 for the increase of toe-in, it may have the same spring constant at its all end portions for connecting it with the upper and lower portions 18b and 18a of the knuckle arm 18. In short, the arrangement of the upper control arm 15 in front of the damper unit 20 in a direction longitudinally of the vehicle body can provide a layout in which the toe-in can readily take place.

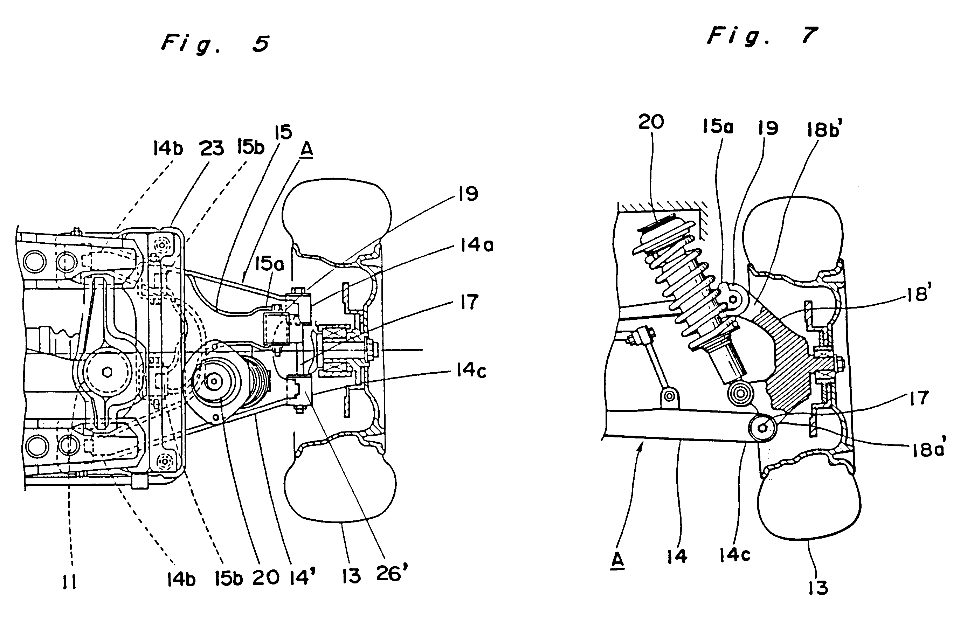

Fig. 5 illustrates a modification of the present invention in which the lower control arm 14ʹ is rigidly secured at its outer rear end portion to another rubber bush 26ʹ which is pivotably coupled with the shaft 17.

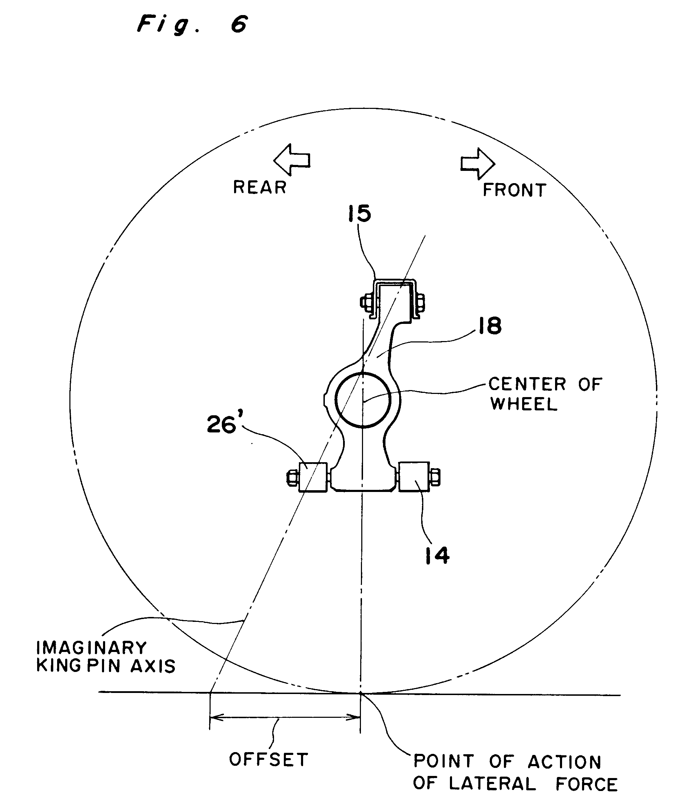

Fig. 6 indicates, in the case of Fig. 5, a relatively large offset between a point of action of the lateral force and the intersection between the imaginary king pin axis and the road surface.

The damper unit 20 may be pivotably coupled at its lower end portion with the knuckle arm 18ʹ in place of the lower control arm 14, as shown in Fig. 7 which particularly shows another modification of the present invention.

From the foregoing, the present invention is applicable to the automobile rear suspension unit A equipped with an H-shaped lower control arm 14, an A-shaped upper control arm 15, a knuckle arm or wheel support 18 having longitudinally opposed lower end portions 18a pivotably connected with the outer end portions 14a and 14c of the lower control arm 14 and an upper end portion 18b pivotably connected with the upper control arm 15, and a damper unit 20 having a lower end pivotably connected with the lower control arm 14 and an upper end pivotably connected with the vehicle body. According to the present invention, since the upper control arm 15 is located ahead of the damper unit 20, the inclination of imaginary king pin axis connecting the outer rear end portion 14c of the lower control arm 14 and the connecting portion between the upper control arm 15 and the wheel support 18 can be rendered to be relatively large so that the amount of offset from the center of each rear wheel 13 may be increased. Accordingly, the rear wheels 13 are advantageously effectively movable in a direction in which the toe-in takes place, when they are subjected to the lateral force.

Furthermore, the offset arrangement between the damper unit 20 and the upper control arm 15 in a direction longitudinally of the vehicle body eliminates the necessity for extending the damper unit 20 through the upper control arm 15 and can be of service to the design freedom for arranging the double wishbone type rear suspension A within a limited space defined inside each rear wheel 13. Such an arrangement is also advantageous in that the damper unit 20 is remarkably improved in service properties.

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention as defined in the appended claims, they should be construed as being included therein.

## Claims

1. A rear suspension structure for use in an automotive vehicle, which comprises:
a wheel support knuckle (18, 18') for rotatably supporting a vehicle rear wheel (13);
an A-shaped upper control arm (15) having an outer end portion (15a) pivotably connected to the upper end portion (18b) of the wheel support knuckle (18, 18') and two inner end portions (15b) pivotably connected to the vehicle body (7);
a damper unit (20) disposed behind the upper control arm (15) relative to the forward direction of the vehicle, the damper unit (20) being connected at its upper end portion with the vehicle body (7) and at its lower end portion to the wheel support structure (14, 15, 18) at a location below the pivotal connection between the upper control arm (15) and the wheel support knuckle (18, 18');
characterised in that, an H-shaped lower control arm (14, 14') is provided having two outer end portions (14a and 14c) pivotably connected to front and rear lower end portions (18a) of said wheel support knuckle (18, 18') respectively and two inner end portions (14b) pivotably connected to the vehicle body (7);
and in that the pivotal connection between the upper control arm (15) and the wheel support bundle (18, 18') is located in front of the vertical transverse plane passing through the rear wheel centre axis (13) such that the axis passing through the pivotal connection located at the outer rear end portion of the lower control arm and the pivotal connection between the upper control arm (15) and the wheel support knuckle (18, 18') intersects the load surface at a point behind the vertical transverse plane passing through the rear wheel centre axis.

2. The rear suspension structure as claimed in claim 1, wherein the two connecting portions between the lower control arm (14, 14') and the wheel support knuckle (18, 18') are respectively located in front and in the rear of the center of rear wheels (13) in the forward direction of the vehicle.

3. The rear suspension structure as claimed in claim 1, wherein the two connecting portions between the lower control arm (14) and the wheel support knuckle (18) comprise in the forward direction of the vehicle a rubber bush (21) at the front and a pillow ball (26) to the rear thereof, respectively.

4. The rear suspension structure as claimed in claim 1, wherein the two connecting portions between said lower control arm (14') and the wheel support knuckle (18') each comprise a rubber bush (21, 26').

5. The rear suspension structure as claimed in claim 4, wherein the rubber bush (26') to the rear of the two connecting portions in the forward direction of the vehicle has a higher spring constant than that to the front.

6. The rear suspension structure as claimed in claim 1, wherein the damper unit (20) is pivotably connected at its lower end portion to the lower control arm (14, 14')

7. The rear suspension structure as claimed in claim 1, wherein the damper unit (20) comprises a damper (20a) and a coil spring (20b).

8. The rear suspension structure as claimed in claim 1, wherein the upper control arm (15) is branched into two on its inner side and the branched portion of the upper control arm (15) is located inside the damper unit (20) in a direction widthwise of the vehicle body (7).

9. The rear suspension structure as claimed in claim 1, wherein the upper (15) and lower (14, 14') control arms are pivotably connected at their respective inner end portions (15b, 14b) with a common rear cross member (10).

10. The rear suspension structure as claimed in claim 9, wherein the rear cross member (10) comprises a pair of juxtaposed first members (22) extending in a direction widthwise of the vehicle body (7), a pair of opposed second members (23) extending substantially vertically and each rigidly secured at its upper portion to one end of each first member (22), and a pair of third members (24) rigidly secured to lower portions of the second members (23) and to a lower surface of a central portion of each first member (22).

## Patentansprüche

1. Eine Hinterradaufhängungsanordnung für die Verwendung bei einem Kraftfahrzeug, die umfaßt:
ein Radhalterungsgelenk (18, 18') zum drehbaren Halten eines Fahrzeughinterrades (13);
einen A-förmigen oberen Steuerarm (15), der einen schwenkbar mit dem oberen Endabschnitt (18b) des Radhalterungsgelenks (18, 18') verbundenen äußeren Endabschnitt (15a) und zwei schwenkbar mit dem Fahrzeugkörper (7) verbundene innere Endabschnitte (15b) besitzt;
eine bezüglich der Vorwärtsrichtung des Fahrzeugs hinter dem oberen Steuerarm (15) angeordnete Stoßdämpfereinheit (20), wobei die Stoßdämpfereinheit (20) an ihrem oberen Endteil mit dem Fahrzeugkörper (7) und an ihrem unteren Endteil mit der Radhalterungsanordnung (14, 15, 18) an einer Stelle unterhalb der Schwenkverbindung zwischen dem oberen Steuerarm (15) und dem Radhalterungsgelenk (18, 18') verbunden ist;
dadurch gekennzeichnet, daß ein H-förmiger unterer Steuerarm (14, 14') vorgesehen ist, der zwei schwenkbar mit vorderen bzw. hinteren unteren Endabschnitten (18a) des besagten Radhalterungsgelenks (18, 18') verbundene äußere Endabschnitte (14a bzw. 14c) und zwei schwenkbar mit dem Fahrzeugkörper (7) verbundene innere Endabschnitte (14b) besitzt;
und daß die Schwenkverbindung zwischen dem oberen Steuerarm (15) und dem Radhalterungsbündel (18, 18') vor der vertikalen Querebene angeordnet ist, die durch die Hinterradmittenachse (13) verläuft, so daß die durch die am äußeren hinteren Endabschnitt des unteren Steuerarms angeordnete Schwenkverbindung und die Schwenkverbindung zwischen dem oberen Steuerarm (15) und dem Radhalterungsgelenk (18, 18') verlaufende Achse die Straßenoberfläche in einem Punkt hinter der durch die Hinterradmittenachse verlaufenden vertikalen Querebene schneidet.

2. Die Hinterradaufhängungsanordnung nach Anspruch 1, dadurch gekennzeichnet, daß die beiden Verbindungsteile zwischen dem unteren Steuerarm (14, 14') und dem Radhalterungsgelenk (18, 18') in der Vorwärtsrichtung des Fahrzeugs jeweils vor bzw. hinter der Mitte der Hinterräder (13) angeordnet sind.

3. Die Hinterradaufhängungsanordnung nach Anspruch 1, dadurch gekennzeichnet, daß die beiden Verbindungsteile zwischen dem unteren Steuerarm (14) und dem Radhalterungsgelenk (18) in Vorwärtsrichtung des Fahrzeugs auf ihrer vorderen Seite eine Gummibuchse (21) bzw. auf ihrer hinteren Seite ein Kugelkissen (26) umfassen.

4. Die Hinterradaufhängungsanordnung nach Anspruch 1, dadurch gekennzeichnet, daß die beiden Verbindungsteile zwischen dem besagten unteren Steuerarm (14') und dem Radhalterungsgelenk (18') jeweils eine Gummibuchse (21, 26') umfassen.

5. Die Hinterradaufhängungsanordnung nach Anspruch 4, dadurch gekennzeichnet, daß die in der Vorwärtsrichtung des Fahrzeugs auf der hinteren Seite der beiden Verbindungsteile angeordnete Gummibuchse (26') eine höhere Federkonstante aufweist, als diejenige auf der vorderen Seite.

6. Die Hinterradaufhängungsanordnung nach Anspruch 1, dadurch gekennzeichnet, daß die Stoßdämpfereinheit (20) an ihrem unteren Endteil schwenkbar mit dem unteren Steuerarm (14, 14') verbunden ist.

7. Die Hinterradaufhängungsanordnung nach Anspruch 1, dadurch gekennzeichnet, daß die Stoßdämpfereinheit (20) einen Stoßdämpfer (20a) und eine Schraubenfeder (20b) umfaßt.

8. Die Hinterradaufhängungsanordnung nach Anspruch 1, dadurch gekennzeichnet, daß sich der obere Steuerarm (15) auf seiner inneren Seite in zwei Arme verzweigt, und der verzweigte Teil des oberen Steuerarms (15) in einer Richtung quer zum Fahrzeugkörper (7) innerhalb der Stoßdämpfereinheit (20) angeordnet ist.

9. Die Hinterradaufhängungsanordnung nach Anspruch 1, dadurch gekennzeichnet, daß die oberen (15) und unteren (14, 14') Steuerarme an ihren jeweils inneren Endabschnitten (15b, 14b) mit einem gemeinsamen hinteren Querträger (10) verbunden sind.

10. Die Hinterradaufhängungsanordnung nach Anspruch 9, dadurch gekennzeichnet, daß der hintere Querträger (10) ein Paar nebeneinanderliegende, sich in einer Richtung quer zum Fahrzeugkörper (7) erstreckende erste Träger (22), ein Paar einander gegenüberliegende, sich im wesentlichen in vertikaler Richtung erstreckende und an ihrem oberen Teil jeweils starr mit einem Ende jedes ersten Trägers (22) verbundene zweite Träger (23), und ein Paar dritte Träger (24) umfaßt, die starr an unteren Teilen der zweiten Träger (23) und an einer unteren Oberfläche eines mittleren Teils jedes ersten Trägers (22) befestigt sind.

## Revendications

1. Structure de suspension arrière destinée à être utilisée dans un véhicule automobile, qui comprend
un bras (18, 18') de support de roue destiné à supporter une roue arrière (13) de véhicule de manière qu'elle puisse tourner,
un bras supérieur (15) de commande en forme de A ayant une partie d'extrémité externe (15a) articulée sur la partie d'extrémité supérieure (18b) du bras (18, 18') de support de roue et de partie (15b) d'extrémité interne articulée sur la carrosserie (7) du véhicule, et
un ensemble (20) à amortisseur placé derrière le bras supérieur (15) de commande, par rapport à l'avance du véhicule, l'ensemble (20) à amortisseur étant raccordé à sa partie d'extrémité supérieure à la carrosserie (7) du véhicule et, à sa partie d'extrémité inférieure, sur la structure de support de roue (14, 15, 18) à un emplacement qui se trouve au-dessous de l'articulation du bras supérieur (15) de commande et du bras de support de roue (18, 18'),
caractérisée en ce qu'un bras inférieur (14, 14') de commande en forme de H est placé avec deux parties d'extrémité externe (14a et 14c) articulées aux parties d'extrémité inférieure avant et arrière (18a) du bras de support de roue (18, 18') respectivement et de parties (14b) d'extrémité interne articulées sur la carrosserie (7) du véhicule, et
en ce que l'articulation formée entre le bras supérieur (15) de commande et le bras de support de roue (18, 18') se trouve en avant du plan transversal vertical passant par l'axe central (13) de roue arrière afin que l'axe passant par l'articulation placée à la partie d'extrémité arrière externe du bras inférieur de commande et l'articulation formée entre le bras supérieur de commande (15) et le bras de support (18, 18') de roue recoupe la surface de route en un point qui se trouve en arrière du plan transversal vertical passant par l'axe central de la roue arrière.

2. Structure de suspension arrière selon la revendication 1, dans laquelle les deux parties de raccordement du bras inférieur (14, 14') de commande et du bras de support de roue (18, 18') se trouvent respectivement en avant et en arrière du centre des roues arrière (13) dans la direction d'avance du véhicule.

3. Structure de suspension arrière selon la revendication 1, dans laquelle les deux parties de raccordement formées entre le bras inférieur (14) de commande et le bras de support de roue (18) comprend, dans la direction d'avance du véhicule, un manchon (21) de caoutchouc placé à l'avant et une rotule (26) de palier à l'arrière.

4. Structure de suspension arrière selon la revendication 1, dans laquelle les deux parties de raccordement placées entre le bras inférieur (14') de commande et le bras de support de roue (18') comportent chacune un manchon de caoutchouc (21, 26').

5. Structure de suspension arrière selon la revendication 4, dans laquelle le manchon de caoutchouc (26') placé à l'arrière des deux parties de raccordement, dans la direction d'avance du véhicule, a une raideur supérieure à celle de l'avant.

6. Structure de suspension arrière selon la revendication 1, dans laquelle l'ensemble (20) à amortisseur est articulé à sa partie d'extrémité inférieure sur le bras inférieur (14, 14') de commande.

7. Structure de suspension arrière selon la revendication 1, dans laquelle l'ensemble (20) à amortisseur comporte un amortisseur (20a) et un ressort hélicoïdal (20b).

8. Structure de suspension arrière selon la revendication 1, dans laquelle le bras supérieur (15) de commande est ramifié en deux parties à sa face interne, et la partie ramifiée du bras supérieur (15) de commande est placée à l'intérieur par rapport à l'ensemble (20) à amortisseur dans la direction latérale de la carrosserie (7) du véhicule.

9. Structure de suspension arrière selon la revendication 1, dans laquelle les bras supérieur (15) et inférieur (14, 14') de commande sont articulés, à leurs parties respectives d'extrémité interne (15b, 14b) sur une traverse arrière commune (10).

10. Structure de suspension arrière selon la revendication 9, dans laquelle la traverse arrière (10) comporte une paire de premiers organes juxtaposés (22) disposés dans la direction de la largeur de la carrosserie (7) du véhicule, deux seconds organes opposés (23) disposés en direction sensiblement verticale et fixés chacun rigidement, à sa partie supérieure, à une première extrémité de chaque premier organe (22), et deux troisièmes organes (24) fixés rigidement aux parties inférieures des seconds organes (23) et à une face inférieure d'une partie centrale de chaque premier organe (22).
